(19) Europäisches Patentamt

European Patent Office

Office européen des brevets

(11) EP 0 868 462 B1

(12) EUROPÄISCHE PATENTSCHRIFT

(45) Veröffentlichungstag und Bekanntmachung des Hinweises auf die Patenterteilung:
01.09.1999 Patentblatt 1999/35

(21) Anmeldenummer: 96943968.6

(22) Anmeldetag: 16.12.1996

(51) Int Cl.$^6$: C08G 18/76, C08G 18/08, C08J 9/36 // (C08G18/76, 101:00)

(86) Internationale Anmeldenummer:
PCT/EP96/05640

(87) Internationale Veröffentlichungsnummer:
WO 97/23535 (03.07.1997 Gazette 1997/29)

(54) **MIKROZELLULÄRES, HARNSTOFFGRUPPENHALTIGES POLYURETHANELASTOMER**

MICROCELLULAR POLYURETHANE ELASTOMER CONTAINING UREA GROUPS

ELASTOMERE DE POLYURETHANNE MICROCELLULAIRE CONTENANT DES GROUPES UREE

(84) Benannte Vertragsstaaten:
AT BE DE ES FI FR GB IT NL PT SE

(30) Priorität: 23.12.1995 DE 19548770

(43) Veröffentlichungstag der Anmeldung:
07.10.1998 Patentblatt 1998/41

(73) Patentinhaber: BASF AKTIENGESELLSCHAFT
67056 Ludwigshafen (DE)

(72) Erfinder:
• KRECH, Rüdiger
  D-49356 Diepholz (DE)
• ROTERMUND, Udo
  D-01990 Ortrand (DE)
• BOLLMANN, Heinz
  D-49594 Alfhausen (DE)
• HEMPEL, Renate
  D-01945 Ruhland (DE)
• SCHOLZ, Wolfgang
  D-49448 Lemförde (DE)
• GENZ, Manfred
  D-49401 Damme (DE)

(56) Entgegenhaltungen:
EP-A- 0 373 456          DE-A- 3 138 422
GB-A- 2 264 501          US-A- 3 823 111
US-A- 4 647 596

## Beschreibung

Technisches Gebiet

Die vorliegende Erfindung betrifft ein mikrozelluläres, harnstoffgruppenhaltiges Polyurethanelastomer, welches im wesentlichen auf 4,4'-Diphenylmethandiisocyanat (4,4'-MDI) als Isocyanatkomponente basiert und verbesserte statische und dynamische Kennwerte aufweist. Die Erfindung betrifft weiterhin ein Verfahren zur Herstellung eines solchen mikrozellulären Polyurethanelastomers sowie dessen Verwendung zur Herstellung von Dämpfungselementen.

Stand der Technik

Die Herstellung von zelligen Polyurethanelastomeren, ihre Verwendung sowie ihre mechanischen und chemischen Leistungsparameter sind ausführlich im Kunststoffhandbuch, Band VII, Polyurethane, 1966, 1983 und 1993 von R. Vieweg und A. Höchtlen bzw. G. Oertel (Carl Hanser Verlag, München) beschrieben. Grundsätzlich zeichnen sich mikrozelluläre Polyurethanelastomere in Bezug auf analog verwendete Gummitypen durch ihre deutlich besseren Dämpfungseigenschaften bei ausgezeichneter Volumenkompressibilität aus, wodurch sie als Bestandteile von vibrations- und stoßdämpfenden Systemen, insbesondere in der Automobilbranche, favorisiert sind.

Das wohl typischste Beispiel für ein mikrozelluläres Polyurethanelastomer für oben angeführten Anwendungsfall ist das Umsetzungsprodukt aus 1,5-Naphthylendiisocyanat (NDI) und Polyethylenglykoladipat mit einem mittleren Molekulargewicht von ca. 2000 g/mol, das als NCO-Prepolymer mit einer aktivatorhaltigen 50 %igen wäßrigen Lösung eines Fettsäuresulfonates zur Reaktion gebracht wird. Obwohl das Leistungsniveau dieser grundlegenden Rezeptur hinsichtlich ihrer Dämpfungscharakteristika sowie übriger statischer und dynamischer Leistungsparameter bisher unerreicht ist, sind aus der Literatur einige wenige Bemühungen bekannt, das für die excellenten Elastomereigenschaften verantwortliche NDI durch das weitaus kostengünstigere und bedeutend leichter zu handhabende 4,4'-MDI als Isocyanatkomponente auszutauschen, wobei deutliche Eigenschaftsverluste einkalkuliert werden. Charakteristische Wertunterschiede zwischen auf NDI und 4,4'-MDI basierenden kompakten Polyurethanelastomeren im allgemeinen und mikrozellulären Rezepturen im besonderen werden im Journal of Elastomers and Plastics Vol. 21 - April 1980, von E.C. Prolingheuer, J.J. Lindsay und H. Kleimann, dargelegt. So werden als wesentliche Nachteile für ein mikrozelluläres Polyurethanelastomer auf 4,4'-MDI-Basis ein deutlich höherer Dämpfungsgrad mit verstärkter Materialaufheizung und signifikant erhöhten Setzbeträgen bei dynamischer Belastung angeführt, die schließlich im Vergleich zum NDI zu einem schnelleren Materialverschleiß führen.

Trotz dieser offenkundig bestehenden Nachteile sind, wie schon erwähnt, aus der Literatur Versuche bekannt, das 4,4'-MDI als Isocyanataustauschkomponente zu NDI in mikrozellulären Polyurethan-elastomeren einzusetzen. Diese Versuche beschränken sich jedoch nur auf den Einsatz neuer Rohstoffkomponenten, insbesondere höhermolekularer Polyhydroxylverbindungen, mit deren Hilfe bestimmte Eigenschaftsvorteile des resultierenden mikrozellulären Polyurethanelastomers erzielt werden sollen.

So beschreibt das EP-A-0496204 ein Verfahren zur Herstellung von zelligen Polyurethanelastomeren unter Verwendung von Polyethercarbonatdiolen, welche Polyoxytetramethylenglykolreste mit dem zahlenmittleren Molekulargewicht Mn von 150 bis 500 g/mol enthalten, als oligomere Polyhydroxylverbindung. Verbessert werden sollen dadurch die mechanischen Eigenschaften, insbesondere die Bruchdehnungswerte, auch bei tieferen Temperaturen. Eine erfindungsgemäße Verbesserung der bekanntlich mit den dynamischen Setzbeträgen korrelierenden statischen Druckverformungsreste nach DIN 53 572, 70°C, ist nicht feststellbar. Selbst bei Einsatz von NDI und einer wäßrigen Verschäumkomponente gemäß der originalen Herstellungsvorschrift (vgl. Kunststoffhandbuch, Band VII, Polyurethane, 1966, 1983 und 1993) werden nur durchschnittliche statische Druckverformungsreste erhalten.

Die EP-A-0243832, die ebenfalls den Einsatz von 4,4'-MDI, u. a. auch in Verbindung mit Wasser als Treibmittel, zur Herstellung von mikrozellulären Polyurethanelastomeren beansprucht, beinhaltet als wesentlichen erfinderischen Gedanken die Verwendung eines hydroxylgruppenhaltigen Polykondensates aus einem kurzkettigen Polyoxytetramethylenglykol und einer aliphatischen Dicarbonsäure als oligomere Polyhydroxylverbindung mit der Aufgabe, ein mittels Pumpen gut dosierfähiges estergruppenhaltiges Polyol für zellige oder kompakte Polyurethanelastomere mit verbesserten mechanischen- und hydrolytischen Eigenschaften zu erhalten. Angaben über bleibende Verformungsgrade bei statischer bzw. dynamischer Belastung, wodurch vibrationsbeständige Materialien üblicherweise charakterisiert werden, fehlen jedoch. Ein Zusammenhang zwischen erfinderischem Inhalt und der für stoßdämpfende Materialien relevanten permanenten Verformung bei statischer und dynamischer Belastung ist damit nicht sichtbar.

DE-A-3613961 beschreibt dagegen ein mikrozelluläres Polyurethanelastomer auf der Grundlage von 4,4'-MDI, das aufgrund einer definierten Zusammensetzung der oligomeren Polyhydroxylverbindung, bestehend aus einem Copolymeren aus Polytetrahydrofuran und ε-Caprolacton, mechanische Kennwerte aufweist, die einen günstigen Kompromiß zwischen statischer Festigkeit und dynamischer Belastbarkeit darstellen. Trotz Einsatz teurer Polyolgrund-

stoffe ist der dadurch erzielte Leistungsgewinn bei Betrachtung der Prüfwerte "Produkthaltbarkeit", Biegefestigkeit nach de Mattia und bleibende Verformung bei 50 % Kompression nur gering. Beispielsweise zeigen die im direkten Zusammenhang mit der praxisrelevanten Größe des dynamischen Setzbetrages stehenden Meßwerte für den Druckverformungsrest nur geringfügige, für den praktischen Einsatz unzureichende Verbesserungen in Anwendung der erfindungsgemäßen Lehre. Auch erscheinen die verwendeten Prüfkriterien "Produkthaltbarkeit" und Biegefestigkeit nach de Mattia für eine praxisnahe Bewertung der dynamischen Eigenschaften nicht ausreichend geeignet, da sie gerade bei partiellen Kennwertverbesserungen nur ungenügend differenziert die objektiv bestehenden Leistungsunterschiede zwischen auf MDI und NDI basierenden Polyurethanelastomeren darzustellen vermögen.

Neben der in der vorstehend aufgeführten DE-A-3613961 beschriebenen Verbesserung von statischen und mechanischen Kennwerten und dynamischer Haltbarkeit durch geeignete Wahl der oligomeren Polyhydroxylverbindung ist, wie am Beispiel des bereits diskutierten und zu Polyurethanprodukten mit exzellenten statisch dynamischen Elastomereigenschaften führenden NDI gut zu erkennen, die Isocyanatkomponente von entscheidendem Einfluß. So ergibt der Einsatz der Isocyanate 3,3'-Dimethyl-4,4'-Biphenyldiisocyanat (TODI) und Paraphenylendiisocyanat (PPDI) ebenfalls mikrozelluläre und kompakte Polyurethanelastomere mit vorzüglichen statischen und dauerelastischen Eigenschaften. Ursächlich hierfür soll die ausgezeichnete Kristallisationsfähigkeit des aus Harnstoff- bzw. Urethangruppen entstehenden Hartsegmentes sein, die letztlich zu einer guten Trennung desselben zu dem aus oligomeren Polyhydroxylverbindungen gebildeten Weichsegment führt. Die schlechtere Kristallisationsneigung der auf 4,4'-MDI beruhenden Harnstoff- bzw. Urethangruppen infolge ihrer stärker gewinkelten räumlichen Struktur wird dagegen als wesentlicher Grund für die deutlich verschlechterten statischen und dauerelastischen Eigenschaften angesehen.

In DE-A-195 09 819 wird neben den NCO auch ein OH-Prepolymer eingesetzt. Diese Variante ergibt nach unseren Untersuchungen zwar eine gute Entformbarkeit, d.h. keine Zerstörung der Teile beim Entformen und dazu gute technologische Herstellbarkeit, aber Druckverformungsrest und Weiterreißfestigkeit sind noch völlig ungenügend.

Darstellung der Erfindung

Der vorliegenden Erfindung lag die Aufgabe zugrunde, ein mikrozelluläres Polyurethanelastomer auf der Grundlage vom im Vergleich zu NDI, TODI und auch PPDI weitaus kostengünstigeren und bedeutend leichter zu handhabenden 4,4'-MDI als hauptsächliche Isocyanatkomponente zu entwickeln, das unabhängig von der Art der verwendeten oligomeren Polyhydroxylverbindung eindeutig verbesserte statisch mechanische Kennwerte, insbesondere Druckverformungsreste, und dynamische Setzbeträge besitzt und damit eine besondere Eignung für Stoßdämpfungssysteme im Kraftfahrzeugbau aufweist.

Diese Aufgabe wurde erfindungsgemäß dadurch gelöst, daß auf der Grundlage von 4,4'-MDI als hauptsächliche Isocyanatkomponente ein mikrozelluläres, harnstoffgruppenhaltiges Polyurethanelastomer, im folgenden als mikrozelluläres PU-Elastomer bezeichnet, mit einem Harnstoffgehalt von 14 bis 18 Gew.-% und einer Struktur hergestellt wird, die neben dem niedermolekularen Hauptsignal für die Molekülkette des Elastomeren durch ein Signal charakterisiert wird, das aus einem oder mehreren Peaks bei einer scheinbaren Molmasse von größer 250 000 g/mol, gemessen mit der Gelpermeations-Chromatographie (GPC) aus einer in N,N-Dimethylformamid mit 1 Prozent Di-n-Butylamin bei 90°C hergestellten Lösung des mikrozellulären PU-Elastomeren gegen Polymethylmethacrylat (PMMA) als Standard, besteht und nach Zugabe von Lithiumchlorid in diese Lösung verkleinert wird oder verschwindet, wobei die Struktur herstellbar ist durch Zugabe von Brönstedt- bzw. Lewis-sauren Reagenzien in einer Menge von 0,01 bis 5 Gew.-%, bezogen auf das Gewicht der Komponenten a), b), e) und gegebenenfalls c).

Gegenstand der Erfindung ist demzufolge ein mikrozelluläres PU-Elastomer auf Basis

a) einer im wesentlichen aus 4,4'-Diphenylmethandiisocyanat bestehenden Isocyanatkomponente mit

b) mindestens einer oligomeren Polyhydroxylverbindung mit einer zahlenmittleren Molmasse von 1000 bis 5000 g/mol und einer Funktionalität von 1,7 bis 3, vorzugsweise 2,

c) gegebenenfalls niedermolekularen Kettenverlängerungs- und/ oder Vernetzungsmitteln und

d) Treibmitteln

sowie

e) Katalysatoren und gegebenenfalls

f) Hilfsmitteln und/oder Zusatzstoffen,

das einen Harnstoffgehalt von 14 bis 18 Gew.-%, der definiert ist als die Menge von aus Diphenylmethandiisocyanat entstandenem Harnstoff der Summenformel $C_{14}H_{12}ON_2$ in Prozent, bezogen auf die Gesamtmenge des Elastomeren nach der Harnstoffbildung, besitzt

und eine physikalisch-chemische Struktur aufweist,

die charakterisiert ist durch ein neben dem niedermolekulareren Hauptsignal auftretendes Signal aus einem oder mehreren Peaks bei einer (scheinbaren) Molmasse von größer 250 000 g/mol, gemessen mit der Gelpermeations-Chromatographie (GPC) aus einer in N,N-Dimethylformamid mit 1 Prozent Di-n-Butylamin bei 90 °C hergestellten Lösung des mikrozellulären Polyurethanelastomeren gegen Polymethylmethacrylat (PMMA) als Standard, das nach Zugabe von Lithiumchlorid in diese Lösung verkleinert wird oder verschwindet,

und die herstellbar ist durch Zugabe von Brönstedt- bzw. Lewis-sauren Reagenzien in einer Menge von 0,01 bis 5 Gew.-%, bezogen auf das Gewicht der Komponenten a), b), e) und gegebenenfalls c).

Gegenstände der Erfindung sind weiterhin ein Verfahren zur Herstellung eines solchen mikrozellulären PU-Elastomers mit verbesserten dynamisch-mechanischen Eigenschaften, das dadurch gekennzeichnet ist, daß Brönstedt- bzw. Lewis-saure Reagenzien in einer Menge von 0,01 bis 5 Gew.-%, bezogen auf das Gewicht der Komponenten a), b), e) und gegebenenfalls c) zugegeben werden und eine Temperung des mikrozellulären, harnstoffgruppenhaltigen Polyurethanelastomers bei 100 bis 120°C über 8 bis 24 Stunden durchgeführt wird, sowie die Verwendung der mikrozellulären PU-Elastomere zur Herstellung von Dämpfungselementen.

Überraschenderweise wurde im Ergebnis der Untersuchung einer Vielzahl von Varianten, die unterschiedliche chemische und physikalische Strukturen des mikrozellulären PU-Elastomeren auf der Grundlage von 4,4'-MDI aufwiesen, gefunden, daß Strukturen, die durch die beschriebenen GPC-Peaks charakterisiert sind, einen minimalen Druckverformungsrest des mikrozellulären PU-Elastomeren bei 80°C ergeben. Dieser Druckverformungsrest, gemessen bei 60 %iger Kompression über 22 h bei 80°C, korreliert mit dem für die praktische Beanspruchung wichtigen Setzbetrag nach dynamischer Dauerbelastung in der Weise, daß ein niedriger Druckverformungsrest auch einem erwünschten niedrigen Setzbetrag entspricht. Die Herstellung unterschiedlicher chemischer Strukturen der auf 4,4'- MDI basierenden Elastomere kann in bekannter Weise, insbesondere durch den Einsatz von oligomeren Polyhydroxylverbindungen aus verschiedenen Grundbausteinen, z.B. mit Polyester- und/oder Polyethergruppen, erfolgen. Die mit unterschiedlichen derartigen chemischen Bausteinen erzeugbaren erfindungsgemäßen, vor allem auf physikalischen Wechselwirkungen beruhenden Strukturen können durch den Einsatz verschiedener Mittel, z.B. eine geeignete Reaktionsführung durch Maßnahmen, die die Isocyanatadditionsreaktion verlangsamen, durch eine entsprechende thermische Nachbehandlung oder die Einbringung von die Bildung dieser Strukturen fördernden Stoffen, die als eine Art Keimbildner für die erfindungsgemäßen Strukturen wirken, erzeugt werden. Diese Maßnahmen zur Erzeugung der erfindungsgemäßen Strukturen können zur Verstärkung der Wirkung auch kombiniert angewandt werden.

Die zur Charakterisierung der erfindungsgemäßen Strukturen erforderliche Lösung für die GPC wird durch Auflösen einer Probe des mikrozellulären PU-Elastomeren in N,N-Dimethylformamid (DMF) mit 1 % Di-n-Butylamin bei einer Temperatur von 90°C hergestellt. Die GPC selbst wird mit dieser Lösung in bekannter Weise an einem Säulenset mit Ultrastyragel geeigneter Porengrößen durchgeführt und gegen PMMA definierter Molmassen als Standard geeicht.

Der Begriff "scheinbare Molmasse" für die Beschreibung der die erfindungsgemäßen Strukturen charakterisierenden Peaks bedeutet, daß diese typischen hochmolekularen Strukturen von größer als 250 000 g/mol völlig oder auch teilweise nicht durch chemische, sondern vor allem physikalische Bindungen verursacht werden, da sie durch Anwesenheit von 0,1 mol LiCl je Liter Lösung (d.h. es liegt eine 0,1 m LiCl - Lösung in dem DMF/Amingemisch vor) verschwinden oder kleiner werden. Die GPC selbst wird dabei in der DMF/Amin- Lösung sowohl mit als auch ohne LiCl an dem beschriebenen Säulenset durchgeführt. Die Detektion kann sowohl durch die Messung des Brechungsindex' als auch durch UV-Absorption erfolgen. Sollte unerwarteterweise ein geringer Rest des zelligen PU-Elastomeren unlöslich bleiben, ist der Nachweis der erfindungsgemäßen Strukturen im Chromatogramm des gelösten Anteils ebenfalls ohne Probleme möglich.

Die erfindungsgemäßen Strukturen lassen sich neben der Charakterisierung durch die GPC vorzugsweise zusätzlich auch durch einen mit der Differential Scanning Calorimetry (DSC) bei einer Aufheizrate von 20°C/min feststellbaren Schmelzbereich von 130°C als minimaler Untergrenze bis 230°C als minimaler Obergrenze nach Temperung des mikrozellulären PU-Elastomeren bei 100 bis 120°C über 8 bis 24 Stunden Zeitdauer vor der Messung beschreiben.

Es ist allgemein anerkannt, daß man mit der DSC und auch mit der GPC Strukturen beschreiben und charakterisieren kann. Es ist auch bekannt, daß man ganz allgemein aus Polymeren an sich gleicher chemischer Zusammensetzung unterschiedliche Strukturen erzeugen kann, die für die Eigenschaften wesentlich sind und nicht nur die chemische Zusammensetzung allein die Eigenschaften beeinflußt. Eine neue derartige Struktur ist als eine neue Stoffmodifikation anzusehen, wie es aus bekannten Lehrbüchern zur Beschreibung und Charakterisierung von Polymeren , z. B. dem Buch "Polymeranalytik" von Martin Hoffmann, Herbert Kröhmer und Rainer Kuhn, erschienen im Georg Thieme Verlag, Stuttgart 1977, hervorgeht.

Wenn in den mikrozellulären PU-Elastomeren die erfindungsgemäße Stoffmodifikation, die mit Hilfe der GPC und ggf. auch der DSC unter festgelegten Bedingungen charakterisiert werden kann, erzeugt wird, haben diese Elastomere unerwarteterweise einen niedrigen Druckverformungsrest bei 80°C und einen niedrigen dynamischen Setzbetrag.

Es ist bekannt, daß auch ganz allgemein Zusammenhänge von derartigen Strukturen und Eigenschaften von Polyurethan-Elastomeren bestehen und die DSC beispielsweise den molekularen Ordnungsgrad als Strukturgröße beschreibt. Solche Zusammenhänge sind beispielsweise in der Zeitschrift Kautschuk und Gummi Kunststoffe, 35.Jahrgang, Nr. 7/82, von Th. Timm für PU - Elastomere beschrieben. Es ist jedoch aus dem allgemein bekannten Wissen um Zusammenhänge zwischen Struktur und Eigenschaften in keiner Weise abzuleiten, daß die erfindungsgemäß beanspruchten Strukturen die erwünschten guten Eigenschaften der zelligen PU-Elastomeren auf der Basis von 4,4'-MDI ergeben. Es läßt sich im Experiment leicht zeigen, daß zellige PU-Elastomere mit zwar gleicher chemischer Zusammensetzung, aber nicht mit den erfindungsgemäßen Strukturen, nur unerwünscht hohe Druckverformungsreste und dynamische Setzbeträge liefern. Man kann jedoch die chemische Zusammensetzung dabei nicht völlig frei wählen, sondern sollte als Optimum einen Harnstoffgehalt des mikrozellulären PU-Elastomeren von 14 bis 18 Gew.-% einhalten. Innerhalb dieses Bereiches der Harnstoffkonzentration sind die Druckverformungsreste und dynamischen Setzbeträge nur dann erniedrigt, wenn die erfindungsgemäßen Strukturen erzeugt worden sind. Mit Bausteinen des Elastomeren aus NCO- und OH-Prepolymeren, z.B. gemäß DE-A-195 09 819, lassen sich die erfindungsgemäßen Strukturen nicht erzeugen. Konsequenterweise erhält man nur ungenügend hohe Druckverformungsreste und niedrige Weiterreißfestikeiten.

Die Herstellung von zelligen PU-Elastomeren auf der Basis von 4,4'-MDI mit derartigen, für die Eigenschaften günstigen Strukturen ist bisher nicht bekannt. Die durch GPC charakterisierbaren erfindungsgemäßen Strukturen wurden für mikrozelluläre PU-Elastomere bisher noch nicht beschrieben.

Im Kunststoffhandbuch, Band VII, Polyurethane 1993, wird als wesentliches Mittel zur Verbesserung des Druckverformungsrestes bei Weichschaumsystemen und kompakten Polyurethanelastomeren lediglich die Schaffung zusätzlicher chemischer Vernetzungsstellen, beispielsweise durch eine begrenzte Funktionalitätserhöhung bei den polyurethanbildenden Rohstoffen bzw. durch Schwefel-, Peroxid- und Isocyanatvulkanisation, beschrieben. Bei den mikrozellulären PU-Elastomeren verschlechtern, d. h. erhöhen, diese Maßnahmen jedoch den Druckverformungsrest und das dynamische Setzverhalten.

Die herkömmliche höhere chemische Vernetzung zur Verbesserung des Druckverformungrestes versagt damit in dem erfindungsgemäßen Fall, und es ist völlig unerwartet, daß die erfindungsgemäßen Strukturen ohne höhere chemische Vernetzung den Druckverformungsrest und den dynamischen Setzbetrag erniedrigen.

Als Resultat umfangreicher Untersuchungen wurde gefunden, daß mit reaktionsverzögernden Substanzen, die in begrenzten Mengen dem Reaktionsgemisch zugeführt werden, die erwünschten erfindungsgemäßen Strukturen erzeugt werden können.

Die Zugabe dieser reaktionsverzögernden Substanzen in das Reaktionsgemisch kann dabei bereits zu Beginn oder während der Herstellung des Prepolymeren und/oder zu Beginn der Verschäumung erfolgen.

Substanzen, die diese Wirkung aufweisen, sind bekannte Lewis- bzw. Brönstedt-saure Reagenzien, die in der Polyurethanchemie vorrangig zur Einstellung verfahrenstechnologisch geforderter Reaktionszeiten bzw. zur Erreichung von lagerstabilen isocyanathaltigen Polyurethanzubereitungen eingesetzt werden. Dazu zählen beispielsweise Benzoylchlorid, Diethylenglykol-bis-chloroformiat, p-Toluolsulfonsäure, n-Alkylbenzolsulfonsäure und deren Salze mit Ethanolamin, Acetylaceton, Acetessigethylester und Mineralsäuren, wie Phosphor- und Salzsäure.

Art und Einsatzmenge beziehen sich auf den jeweiligen Anwendungsfall.

Die Erzeugung der erfindungsgemäßen Strukturen, die durch die GPC und gegebenenfalls auch DSC in der erwähnten Weise charakterisiert werden, ist dabei das Hauptkriterium.

Es zeigte sich überraschenderweise, daß sich diese Strukturen besonders leicht durch sogenannte latent- oder zeitkatalytisch wirkende Katalysatorsysteme herstellen lassen. Diese Katalysatoren werden erst nach einer bestimmten Zeit nach Vermischen der reagierenden Komponenten aktiv, indem sie zunächst die Polyurethan und die Harnstoffbildungsreaktion verzögern. Solche Katalysatorsysteme können beispielsweise Mischungen aus Reaktionsverzögerern und Reaktionsbeschleunigern sein oder Stoffe, die chemische Gruppen zur Reaktionsbeschleunigung und Reaktionsverzögerung an einem Molekül tragen. Das Monoethanolaminsalz der n-Alkylbenzolsulfonsäure mit $C_9$ bis $C_{15}$ ist dafür ein geeignetes Beispiel.

Diese reaktionsverzögend wirkenden Substanzen werden in einer Menge von 0,01 bis 5 Gew.-%, vorzugsweise 0,05 bis 2 Gew.-%, bezogen auf das Gewicht der Komponenten a), b), (e) und gegebenenfalls c), eingesetzt.

Bereits durch einfache Verschäumung von Handansätzen oder von vorzugsweise in Niederdruckschäummaschinen hergestellten Mischungen der reagierenden Komponenten in geschlossenen Formen kann man auf diesem Wege die beschriebenen Strukturen in mikrozellulären PU-Elastomeren erzeugen.

Die Herstellung der erfindungsgemäßen Strukturen wird erheblich unterstützt, wenn man die Temperung des mikrozellulären PU-Elastomeren sofort oder spätestens 2 Stunden nach der Entformung beginnt. Die Charakterisierung der erfindungsgemäßen Strukturen läßt auch deren relative Quantifizierung zu. So wächst bei Kombination der Maßnahmen des Einsatzes von reaktionsverzögernden Stoffen oder Molekülgruppen mit der sofortigen thermischen Nachbehandlung unmittelbar nach der Entformung beispielsweise das Verhältnis der Fläche oder der Hohe der beschriebenen Peaks über 250 000 g/mol bei der GPC zum Hauptpeak des PU-Elastomeren im Bereich unter 250 000 g/mol. Dieses höhere Verhältnis zeigt einen höheren Gehalt der erfindungsgemäßen Strukturen an, der nicht oder nur unzureichend zustande kommt, wenn man mit dem Tempern erst nach 2 h nach der Entformung beginnt. Wegen der höheren Menge an erfindungsgemäßen Strukturen im mikrozellulären PU-Elastomer verringern sich der Druckverformungsrest und der dynamische Setzbetrag.

Von Vorteil ist, daß durch diese Maßnahme weder die Entformbarkeit noch vorgegebene Zykluszeiten nachteilig beeinflußt werden.

Es zeigte sich überraschenderweise, daß ein anteiliger Gehalt von in den Komponenten a), d) und gegebenenfalls e) und f) dispergiertem Harnstoff, beispielsweise als Reaktionsprodukt des 4,4'-MDI mit Wasser, die Entstehung der erfindungsgemäßen Strukturen fördert. Der Harnstoffgehalt sollte dabei zwischen 0,05 und 5 Gew.-%, vorzugsweise 0,1 bis 1 Gew.-%, bezogen auf das gesamte Elastomere, betragen. Die Herstellung dieses dispergierten Harnstoffes erfolgt bevorzugt durch Zugabe der entsprechenden Isocyanatmenge zur wäßrigen Vernetzerkomponente.

Die prozentuale Harnstoffmenge ist definiert als die Menge von aus MDI entstandenem Harnstoff der Summenformel $C_{14}H_{12}ON_2$ in Prozent, bezogen auf die Gesamtmenge nach der Harnstoffbildung. Die entweichende stöchiometrische Menge $CO_2$ bei der Bildung des Harnstoffes aus Wasser und Isocyanat geht dann nicht mehr in die Gesamtmenge ein, wie es z.B. auch in der Berechnungsformel für die gesamte Harnstoffmenge im mikrozellulären PU-Elastomer in unserem Beispiel 1 zur näheren Erläuterung der Erfindung zum Ausdruck kommt.

Man kann den die Bildung der erfindungsgemäßen Strukturen fördernden Harnstoff auch auf anderem Wege, z.B. aus MDI und einem Amin, z.B. 4,4'-Diphenylmethandiamin, erzeugen.

Neben dem Kennwert Druckverformungsrest als statisches Maß für das Rückstellverhalten eines Elastomers und als Korrelationsgröße für den unter dynamischen Bedingungen ermittelten und die praktischen Anforderungen an ein Stoßdämpfungssystem im Kraftfahrzeugsektor besser charakterisierenden Prüfwert Setzbetrag dienen weitere Kenngrößen wie Zugfestigkeit, Bruchdehnung und Weiterreißwiderstand der umfassenden Charakterisierung eines Elastomers. Besonders für die Beurteilung der Entformungsfestigkeit und der mechanischen Beständigkeit unter dynamischen Belastungen ist die Kenntnis dieser unter statischen Bedingungen ermittelten Kennwerte von Bedeutung, wobei hierbei dem Niveau des Weiterreißwiderstandes eine wesentliche Rolle beigemessen wird.

Bekanntlich ist der Wert des Weiterreißwiderstandes bei kompakten Polyurethanen in erster Linie von dem jeweiligen rezeptiv festgelegten Hartsegmentgehalt bestimmt, d. h. letztlich durch seine Rezepturhärte fixiert. Bei zelligen Polyurethanen ist die Rohdichte des Schaumes eine zusätzliche wesentliche Einflußgröße und bei Vergleich von Schäumen unterschiedlicher Rohdichte zu berücksichtigen.

Mikrozelluläre PU-Elastomere, bei denen im wesentlichen Polymeraufbau und Zellbildung durch die Hauptreaktion zwischen Isocyanat und Wasser entstehen, besitzen ein Hartsegment, welches auf Harnstoffstrukturen beruht. Eine Erhöhung des Harnstoffhartsegmentgehaltes, realisierbar durch Erhöhung des rezeptiven Isocyanatgehaltes bzw. über Erhöhung des Molekulargewichtes der oligomeren Polyhydroxylverbindung bei gleichzeitig unverändertem Isocyanatgehalt, führt in Analogie zu den kompakten Elastomeren zu verbesserten Weiterreißwiderständen und Zugmodulwerten. Diese Eingriffsmöglichkeit ist jedoch nur begrenzt nutzbar, da zum einen die materialspezifische Größe Stauchhärte bei einer festgelegten Rohdichte in unerwünschter Weise erhöht wird und zum anderen die die Harnstoffbildung begleitende und für den Treibvorgang genutzte Kohlendioxidentwicklung deutlich verstärkt wird, so daß es selbst bei noch akzeptabler Stauchhärte zu Bläheffekten am entformten Formkörper mit mechanischer Beschädigung infolge von Rißbildung kommt.

Es wurde überraschenderweise gefunden, daß die erfindungsgemäßen Strukturen nur im Zusammenhang mit einem Harnstoffgehalt von 14 bis 18 Gew.-% besonders wirksam für die Senkung von Druckverformungsrest und dynamischem Setzbetrag, verbunden mit einem guten Entformverhalten, sind. Ein gutes Entformverhalten erfordert eine verhältnismäßig hohe Festigkeit im Moment der Entformung, damit besonders bei Entformungen kompliziert gebauter Teile keine mechanischen Beschädigungen des Formteils aus dem mikrozellulären PU-Elastomer auftreten.

Den Harnstoffgehalt zwischen 14 und 18 Gew.-% kann man mit Hilfe der Wassermenge in der Rezeptur gemäß der in Beispiel 1 zur Erläuterung der Erfindung angegebenen Formel einstellen. Die Harnstoffmenge, die ggf. zur Förderung der Bildung der erfindungsgemäßen Strukturen bereits vor der Verschäumung zugefügt oder erzeugt wird, geht in die Gesamtharnstoffmenge mit ein. Meist ist diese Menge jedoch gegenüber dem Gesamtharnstoffgehalt vernachlässigbar klein.

Im Harnstoff-Konzentrationsbereich unter 14 Gew.-% lassen sich die erfindungsgemäßen Strukturen mit den bisher beschriebenen Maßnahmen nicht mehr sicher erzeugen und/oder deren Wirkung auf die Senkung von Druckverformungsrest und dynamischem Setzbetrag ist eingeschränkt. Im Konzentrationsbereich über 18 Gew.-% ist ebenfalls die Erzeugung dieser Strukturen nicht mehr sicher möglich. Außerdem ist durch die Reaktion zwischen Wasser und Isocyanat zur Erzeugung des Harnstoffs der Bläheffekt durch die gleichzeitig eintretende $CO_2$-Entwicklung so groß, daß sich in den Formkörpern unerwünschte Risse nach der Entformung bilden können.

Für die Herstellung des erfindungsgemäßen mikrozellulären PU-Elastomeren finden neben den bereits angeführten Stoffen die an sich bekannten Ausgangskomponenten Verwendung, zu denen im einzelnen folgendes auszuführen ist:

a) Die Isocyanatkomponente a) besteht erfindungsgemäß im wesentlichen aus 4,4'-MDI.

Daneben kann sie aber auch weitere organische und/oder modifizierte organische Polyisocyanate enthalten. Vorzugsweise werden neben dem 4,4'-MDI auch 2,4'- und/oder 2,2'-MDI sowie Mischungen aus MDI-Isomeren mit Polyphenylpolymethylenpolyisocyanaten (Roh-MDI) und Mischungen aus Roh-MDI und Toluylendiisocyanaten eingesetzt.

Es können auch sogenannte modifizierte mehrwertige Diphenylmethandi- oder polyisocyanate, d.h. Produkte, die durch chemische Umsetzung des MDI zum Einsatz kommen. Beispielhaft genannt seien Ester-, Harnstoff-, Biuret-, Allophanat- und vorzugsweise Carbodiimid-, Isocyanurat- und/oder Urethangruppen enthaltende Di- und/oder Polyisocyanate auf der Grundlage der Diphenylmethanstruktur.

Auf der Grundlage der Diphenylmethanstruktur kommen im einzelnen beispielsweise in Betracht: Urethangruppen enthaltende aromatische Polyisocyanate mit NCO-Gehalten von 3 bis 33,6 Gew.-%, vorzugsweise von 4 bis 8 Gew.-%, beispielsweise mit niedermolekularen Diolen, Triolen, Oxyalkylenglykolen, Dioxyalkylenglykolen oder Polyoxyalkylen-glykolen mit Molekulargewichten bis 800 modifiziertes 4,4'MDI, wobei als Di- bzw. Polyoxyalkylen-glykole, die einzeln oder als Gemische eingesetzt werden können, beispielsweise genannt seien: Diethylen-, Dipropylen-, Polyoxyethylen-, Polyoxypropylen- und Polyoxypropylen-polyoxyethylen-glykole. Geeignet sind auch NCO-Gruppen enthaltende Prepolymere mit NCO-Gehalten von 3 bis 31 Gew.-%, vorzugsweise von 4 bis 8 Gew.-%, mit Polyesteralkoholen, beispielsweise auf der Basis von Dicarbonsäuren mit 2 bis 12 Kohlenstoffatomen und zweiwertigen Alkoholen. Als Polyesteralkohole können die unter den Polyhydroxylverbindungen genannten und näher ausgeführten verwendet werden.

Analog dazu können auch estermodifizierte Polyether bzw. ethermodifizierte Polyester eingesetzt werden.

Bewährt haben sich ferner flüssige Carbodiimidgruppen und/oder Isocyanuratringe enthaltende Polyisocyanate mit NCO-Gehalten von 3 bis 33,6 Gew.-%, z.B. auf Basis von 4,4'-, 2,4'- und/oder 2,2'-MDI sowie die entsprechenden Isomerengemische z.B. aus 4,4'- und 2,4'-, Roh-MDI und Gemische aus Toluylendiisocyanaten und Roh-MDI.

Der Einsatz von Vorpolymeren aus Polyisocyanaten und den Vertretern der Komponenten (b) und ggf. (c) mit Isocyanat-Endgruppen anstelle der Isocyanate oder gemeinsam mit diesen als Mischung ist ebenfalls möglich.

Die genannten Diisocyanate können gegebenenfalls zusammen bis etwa 15 Mol-% (bezogen auf Diisocyanat) eines höherfunktionellen Polyisocyanates eingesetzt werden. Die Menge des höherfunktionellen Polyisocyanats muß jedoch so begrenzt werden, daß ein noch zumindest teilweise in N,N-Dimethylformamid mit 1 % Di-n-Butylamin lösliches Produkt erhalten wird. Eine größere Menge an höherfunktionellen Isocyanaten muß im allgemeinen durch die Mitverwendung von im Durchschnitt gegenüber Isocyanaten weniger als difunktionellen Verbindungen und/oder Isocyanaten ausgeglichen werden, so daß eine zu weit gehende chemische Vernetzung des Produktes vermieden wird.

b) Als oligomere Polyhydroxylverbindungen b) kommen insbesondere solche mit im wesentlichen linearer Molekülkette in Betracht. Vorzugsweise eingesetzt werden Polyoxyalkylenglykole, im wesentlichen Polyoxytetramethylenglykole, carbonat- und estergruppenmodifizierte Polyoxyalkylenglykole, im wesentlichen carbonat- und estergruppenmodifizierte Polyoxytetramethylenglykole und Polyesterglykole mit einer zahlenmittleren Molmasse von 1000 bis 5000 g/mol.

Sowohl die Polyoxytetramethylenglykole als auch carbonat- und estergruppenhaltigen Modifikate des Polyoxytetramethylenglykols können als Einzelkomponenten oder in Form von Mischungen zur Anwendung kommen. Ebenso sind die Polyesterpolyole einzeln oder in Abmischungen miteinander anwendbar.

Geeignete im wesentlichen lineare Polyesterpolyole können beispielsweise aus Dicarbonsäuren mit 2 bis 12 Kohlenstoffatomen und zweiwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische verwendet werden. Zur Herstellung der Polyesterpolyole kann es gegebenenfalls vorteilhaft sein, anstelle der Carbonsäure die entsprechenden Carbonsäurederivate, wie Carbonsäureester mit 1 bis 4 Kohlenstoffatomen im Alkoholrest, Carbonsäureanhydride oder Carbonsäurechloride zu verwenden. Beispiele für zweiwertige Alkohole sind Glykole mit 2 bis 16 Kohlenstoffatomen, vorzugsweise 2 bis 6 Kohlenstoffatome, wie z. B. Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften kannen die zweiwertigen Alkohole allein oder gegebenenfalls in Mischungen untereinander verwendet werden.

Geeignet sind ferner hydroxylgruppenhaltige Polyester der Kohlensäure mit den genannten Glykolen, insbesondere solchen mit 4 bis 6 Kohlenstoffatomen, wie Butandiol-1,4 und/oder Hexandiol-1,6, Kondensationsprodukte von Hydroxycarbonsäuren, beispielsweise ω-Hydroxycapronsäure und vorzugsweise Polymerisationsprodukten von Lactonen, beispielsweise gegebenenfalls substituierten ε-Caprolactonen.

Als Polyesterpolyole vorzugsweise verwendet werden Ethandiolpolyadipate, 1,4-Butandiol-polyadipate, Ethandiol-butandiolpolyadipate, 1,6-Hexandiol-neopentylglykol-polyadipate, 1,6-Hexandiol-1,4-Butandiol-polyadipate und Polycaprolactone.

Geeignete estergruppenhaltige Polyoxyalkylenglykole, im wesentlichen Polyoxytetramethylenglykole, sind Polykondensate aus organischen, vorzugsweise aliphatischen Dicarbonsäuren, insbesondere Adipinsäure mit Polyoxymethylenglykolen des zahlenmittleren Molekulargewichtes von 162 bis 600 und gegebenenfalls aliphatischen Diolen, insbesondere Butandiol-1,4. Ebenfalls geeignete estergruppenhaltige Polyoxytetramethylenglykole sind solche aus der Polykondensation mit ε-Caprolacton gebildete Polykondensate.

Geeignete carbonatgruppenhaltige Polyoxyalkylenglykole, im wesentlichen Polyoxytetramethylenglykole, sind Polykondensate aus diesen mit Alkyl- bzw. Arylcarbonaten oder Phosgen.

c) Bei der erfindungsgemäßen Herstellung des mikrozellulären PU-Elastomers können niedermolekulare Kettenverlängerungs-und/oder Vernetzungsmitteln c) eingesetzt werden.

Geeignete Kettenverlängerungs- und/oder Vernetzungsmittel besitzen üblicherweise Molekulargewichte kleiner als 500, vorzugsweise von 60 bis 400. Verwendet werden können beispielsweise Alkandiole mit 2 bis 12 Kohlenstoffatomen, vorzugsweise mit 2, 4 oder 6 Kohlenstoffatomen, wie z.B. Ethan-, 1,3-Propan-, 1,5-Pentan-, 1,6-Hexan-, 1,7-Heptan-, 1,8-Octan-, 1,9-Nonan-, 1,10-Decandiol und vorzugsweise 1,4-Butandiol, Dialkylenglykole mit 4 bis 8 Kohlenstoffatomen, wie z.B. Diethylenglykol und Dipropylenglykol und di- bis tetrafunktionelle Polyoxyalkylen-polyole mit einem Molekulargewicht bis 500. Geeignet sind jedoch auch verzweigtkettige und/oder ungesättigte Alkandiole mit üblicherweise nicht mehr als 12 Kohlenstoffatomen, wie z.B. 1,2-Propandiol, 2-Methyl-, 2,2-Dimethyl-propandiol-1,3, 2-Butyl-2-ethylpropandiol-1,3, Buten-2-diol-1,4 und Butin-2-diol-1,4, Diester der Terephthalsäure mit Glykolen mit 2 bis 4 Kohlenstoffatomen, wie z.B. Terephthalsäure-bisethylenglykol- oder -butandiol-1,4, Hydroxyalkylenether des Hydrochinons oder Resorcins, wie z.B. 1,4-Di-(β-hydroxyethyl)-hydrochinon oder 1,3-Di(β-hydroxyethyl)-resorcin, Alkanolamine mit 2 bis 12 Kohlenstoffatomen, wie z.B. Ethanolamin, 2-Aminopropanol und 3-Amino-2,2-dimethylpropanol, N-Alkyldialkanolamine, wie z.B. N-Methyl- und N-Ethyl-diethanolamin.

Als höherfunktionelle Vernetzungsmittel seien beispielsweise tri- und höherfunktionelle Alkohole, wie z.B. Glycerin, Trimethylolpropan, Pentaerythrit und Trihydroxycyclohexane sowie Trialkanolamine, wie z.B. Triethanolamin genannt.

Als Kettenverlängerungsmittel vorzüglich bewährt haben sich und daher bevorzugt verwendet werden alkylsubstituierte aromatische Polyamine mit Molekulargewichten vorzugsweise von 122 bis 400, insbesondere primäre aromatische Diamine, die in ortho-Stellung zu den Aminogruppen mindestens einen Alkylsubstituenten besitzen, welcher die Reaktivität der Aminogruppe durch sterische Hinderung vermindert, die bei Raumtemperatur flüssig und mit den höhermolekularen, mindestens difunktionellen Verbindungen (b) und N-perethoxylierten Polyoxyalkylen-polyamine (c) unter den Verarbeitungsbedingungen zumindest teilweise, vorzugsweise jedoch vollständig mischbar sind.

Zur Herstellung der mikrozellulären PU-Elastomere werden zweckmäßigerweise die technisch gut zugänglichen 1,3,5-Tri-ethyl-2,4-phenylendiamin, 1-Methyl-3,5-diethyl-2,4-phenylendiamin, Mischungen aus 1-Methyl-3,5-diethyl-2,4- und -2,6-phenylendiaminen, sogenanntes DETDA, Isomerengemische aus 3,3'-di- oder 3,3',5,5'-tetraalkylsubstituierten 4,4'-Diaminodiphenylmethanen mit 1 bis 4 C-Atomen im Alkylrest, insbesondere Methyl-, Ethyl- und Isopropylreste gebunden enthaltende 3,3',5, 5'-tetraalkylsubstituierte 4,4'-Diamino-diphenylmethane sowie Gemische aus den genannten tetraalkylsubstituierten 4,4'-Diamino-diphenylmethanen und DETDA verwendet.

Zur Erzielung spezieller mechanischer Eigenschaften kann es auch zweckmäßig sein, die alkylsubstituierten aromatischen Polyamine im Gemisch mit den vorgenannten niedermolekularen mehrwertigen Alkoholen, vorzugsweise zwei- und/oder dreiwertigen Alkoholen oder Dialkylenglykolen zu verwenden.

Die niedermolekularen Kettenverlängerungs- und/oder Vernetzungsmittel werden somit insbesondere ausgewählt aus der Gruppe der niedermolekularen di- und/oder trifunktionellen Alkohole, di- bis tetrafunktionellen Polyoxyalkylen-polyole mit einem Molekulargewicht bis 500 und der alkylsubstituierten aromatischen Diamine oder von Mischungen aus mindestens zwei der genannten Kettenverlängerungs- und/oder Vernetzungsmittel.

d) Als Treibmittel d) wird erfindungsgemäß insbesondere Wasser eingesetzt, das mit Isocyanatgruppen unter Bildung von Kohlendioxid reagiert.

Die Wassermengen, die zweckmäßigerweise verwendet werden können, betragen 0,01 bis 5 Gew.-%, vorzugsweise 0,3 bis 3,0 Gew.-%, bezogen auf das Gewicht der Komponenten (b) bis (c).

Daneben können aber auch andere in der Polyurethanherstellung übliche Treibmittel verwendet werden. Geeignet sind beispielsweise niedrig siedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte, vorzugsweise fluorierte Kohlenwasserstoffe, wie z.B. Methylenchlorid und Dichlormonofluormethan, per- oder partiell fluorierte Kohlenwasserstoffe wie z.B. Trifluormethan, Difluormethan, Difluorethan, Tetrafluorethan und Heptafluorpropan, Kohlenwasserstoffe, wie z.B. n- und iso-Butan, n- und iso-Pentan sowie die technischen Gemische dieser Kohlenwasserstoffe, Propan, Propylen, Hexan, Heptan, Cyclobutan, Cyclopentan und Cyclohexan, Dialkylether, wie z.B. Dimethylether, Diethylether und Furan, Carbonsäureester, wie z.B. Methyl- und Ethylformiat, Ketone, wie z.B. Aceton, und fluorierte und/oder perfluorierte, tertiäre Alkylamine, wie z.B. Perfluordimethyl-isopropylamin. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung derartiger zellhaltiger elastischer Formkörper aus gebunden enthaltenden Elastomeren hängt ab von der Dichte, die man erreichen will, sowie von der Menge des mitverwendeten Wassers. Im allgemeinen liefern Mengen von 1 bis 15 Gew.-%, vorzugsweise 2 bis 11 Gew.-%, bezogen auf das Gewicht der Komponenten (b) bis (c), zufriedenstellende Ergebnisse.

e) Zur Beschleunigung der Reaktion werden dem Reaktionsansatz Katalysatoren e) einzeln wie auch in Abmischung miteinander zugegeben. Vorzugsweise sind dies metallorganische Verbindungen, wie Zinn-(II)-Salze von organischen Carbonsäuren, z. B. Zinn-(II)-dioctoat, Zinn-(II)-dilaurat, Dibutylzinndiacetat und Dibutylzinndilaurat und tertiäre Amine wie Tetramethylethylendiamin, N-Methylmorpholin, Diethylbenzylamin, Triethylamin, Dimethylcyclohexylamin, Diazabicyclooctan, N,N'-Dimethylpiperazin, N-Methyl,N'-(4-N-Dimethylamino-)Butylpiperazin, N,N,N',N'',N''-Pentamethyldiethylendiamin oder ähnliche.

Weiterhin kommen als Katalysatoren in Betracht: Amidine, wie z.B. 2,3-Dimethyl-3,4,5,6-tetrahydropyrimidin, Tris-(dialkylaminoalkyl)-s-hexahydrotriazine, insbesondere Tris-(N,N-dimethylaminopropyl)-s-hexahydrotriazin, Tetraalkylammoniumhydroxide, wie z.B. Tetramethylammoniumhydroxid, Alkalihydroxide, wie z.B. Natriumhydroxid, und Alkalialkoholate, wie z.B. Natriummethylat und Kaliumisopropylat, sowie Alkalisalze von langkettigen Fettsäuren mit 10 bis 20 C-Atomen und gegebenenfalls seitenständigen OH-Gruppen.

Je nach einzustellender Reaktivität gelangen die Aktivatoren in Mengen von 0,001 bis 0,5 Gew.-%, bezogen auf das Prepolymere, zur Anwendung.

f) Bei der erfindungsgemäßen Herstellung des mikrozellulären PU-Elastomers können neben den weiter oben aufgeführten reaktionsverzögernd wirkenden Substanzen weitere Hilfs- und Zusatzstoffe f) eingesetzt werden.

Dazu zählen beispielsweise oberflächenaktive Substanzen, Hydrolyseschutzmittel, Antioxidantien, Zellregler, Flammschutzmittel sowie Farbstoffe.

Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Die oberflächenaktiven Substanzen werden üblicherweise in Mengen von 0,01 bis 5 Gewichtsteilen, bezogen auf 100 Gewichtsteile der Komponenten (b) bis (d) angewandt.

Als Füllstoffe sind die an sich bekannten üblichen organischen und anorganischen Füllstoffe zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum und Zeolithe, Metalloxide, wie z.B. Kaolin, Aluminiumoxide, Titanoxide und Eisenoxide, Metallsalze wie z.B. Kreide, Schwerspat und anorganische Pigmente, wie z.B. Cadmiumsulfid und Zinksulfid. Vorzugsweise verwendet werden Kaolin (China Clay), Aluminiumsilikat und Copräzipitate aus Bariumsulfat und Aluminiumsilikat sowie natürliche und synthetische faserförmige Mineralien wie z.B. Wollastonit oder Glasfasern verschiedener Länge, die gegebenenfalls geschlichtet sein können. Als organische Füllstoffe kommen beispielsweise in Betracht: Ruß, Melamin, Kollophonium, Cyclopentadienylharze und Pfropfpolymerisate auf Styrol-Acrylnitrilbasis, die durch in situ Polymerisation von Acrylnitril-Styrol-Mischungen in Polyoxyalkylen-polyolen analog den Angaben der deutschen Patentschriften 11 11 394, 12 22 669, (US 3 304 273, 3 383 351, 3 523 093), 11 52 536 (GB 1 040 452) und 11 52 537 (GB 987 618) hergestellt und danach gegebenenfalls aminiert werden können sowie Fillerpolyoxyalkylen-polyole oder -polyamine, bei denen wäßrige Polymerdispersionen in Polyoxyalkylen-polyol- oder -polyamindispersionen übergeführt werden. Die anorganischen und organischen Füllstoffe können einzeln oder als Gemische verwendet werden.

Die anorganischen und/oder organischen Füllstoffe können der Reaktionsmischung beispielsweise in Mengen von 0,5 bis 35 Gew.-%, vorzugsweise 3 bis 20 Gew.-%, bezogen auf das Gewicht der Komponenten (a) bis (d), einverleibt werden.

Geeignete Flammschutzmittel sind beispielsweise Trikresylphosphat, Tris-2-chlorethylphosphat, Tris-chlorpropylphosphat und Tris-2,3-dibrompropylphosphat.

Außer den bereits genannten halogensubstituierten Phosphaten können auch anorganische Flammschutzmittel, wie z.B. Aluminiumoxidhydrat, Antimontrioxid, Arsenoxid, Ammoniumpolyphosphat und Calciumsulfat oder Melamin, Blähgraphit oder Mischungen davon, beispielsweise Mischungen aus Melamin, Blähgraphit und/oder Ammoniumpolyphosphat, zum Flammfestmachen der Formkörper verwendet werden. Im allgemeinen hat es sich als zweckmäßig erwiesen 5 bis 50 Gew.-Teile, vorzugsweise 5 bis 25 Gew.-Teile der genannten Flammschutzmittel für jeweils 100 Gew.-Teile der Komponenten (b) bis (d) zu verwenden.

Nähere Angaben über die oben genannten anderen üblichen Hilfsmittel sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

Die erfindungsgemäßen mikrozellulären PU-Elastomeren werden zweckmäßigerweise nach dem one shot-Verfahren mit Hilfe der Niederdruck-Technik oder insbesondere der Reaktionsspritzguß-Technik (RIM) in offenen oder vorzugsweise geschlossenen Formwerkzeugen, hergestellt. Die Reaktion wird insbesondere unter Verdichtung in einem geschlossenen Formwerkzeug durchgeführt. Die Reaktionsspritzguß-Technik wird beispielsweise beschrieben von H. Piechota und H. Röhr in "Integralschaumstoffe", Carl Hanser-Verlag, München, Wien 1975; D.J. Prepelka und J.L. Wharton in Journal of Cellular Plastics, März/April 1975, Seiten 87 bis 98 und U. Knipp in Journal of Cellular Plastics, März/April 1973, Seiten 76-84.

Bei Verwendung einer Mischkammer mit mehreren Zulaufdüsen können die Ausgangskomponenten einzeln zugeführt und in der Mischkammer intensiv vermischt werden. Als vorteilhaft hat es sich erwiesen, nach dem Zweikomponenten-Verfahren zu arbeiten.

Nach einer besonders vorteilhaften Ausführungsform wird zunächst ein NCO-gruppenhaltiges Prepolymeres hergestellt. Dazu werden die oligomeren Polyhydroxylverbindungen b), gegebenenfalls gemeinsam mit niedermolekularen Kettenverlängerungs- und/oder Vernetzungsmitteln c) mit der im wesentlichen aus 4,4'-MDI bestehenden Isocyanatkomponente a) bei Temperaturen von 80°C bis 160°C, vorzugsweise von 110°C bis 150°C, zur Reaktion gebracht. Die Reaktionszeit ist auf das Erreichen des theoretischen NCO-Gehaltes bemessen.

Treibmittel d) sowie Katalysatoren e) und gegebenenfalls weitere Hilfsmittel und /oder Zusatzstoffe f) werden üblicherweise in einer Vernetzerkomponente vereinigt.

Die Herstellung der mikrozellulären Formteile wird vorteilhafterweise unter ausschließlicher Verwendung von Wasser als Treib- und Kettenverlängerungsmittel bei einem NCO/OH-Verhältnis von 0,85 bis 1,20 sowie Katalysatoren e) im Beisein von Hilfs- und/oder Zusatzstoffen f) durchgeführt, wobei das auf 80 bis 110°C erwärmte NCO-Prepolymer intensiv mit Wasser, Katalysator und Hilfs- und/ oder Zusatzstoffen gemischt und in einer der gewünschten Formteildichte entsprechenden Menge in ein beheiztes, dichtschließendes Formwerkzeug gebracht wird. Die Formteile sind nach 10 bis 40 Minuten ausgehärtet und damit entformbar.

Die Menge des in das Formwerkzeug eingebrachten Reaktionsgemisches wird üblicherweise so bemessen, daß die erhaltenen Formkörper eine Dichte von 250 bis 1400 kg/m$^3$ besitzen, wobei die kompakten Formkörper eine Dichte vorzugsweise von 1000 bis 1400 kg/m$^3$, und insbesondere von 1000 bis 1200 kg/m$^3$, die mikrozellulären Formkörper vorzugsweise eine Dichte von 300 bis 1000 kg/m$^3$, insbesondere von 350 bis 800, aufweisen. Die Ausgangskomponenten werden üblicherweise mit einer Temperatur von 15 bis 80°C, vorzugsweise von 30 bis 65°C, in das Formwerkzeug eingebracht. Die Formwerkzeugtemperatur beträgt zweckmäßigerweise 20 bis 110°C, vorzugsweise 35 bis 95°C. Die Verdichtungsgrade zur Herstellung der mikrozellulären oder zelligen Formkörper liegen zwischen 1,1 und 8, vorzugsweise zwischen 2 und 6.

Gegenüber den mikrozellulären PU-Elastomeren auf NDI-Basis ist bei den erfindungsgemäßen PU-Elastomeren auf MDI-Basis der Formeninnendruck erheblich (bis zu ca. 50 %) erhöht, um die gleiche Schaumstoffdichte zu erhalten.

Zur Verbesserung der Entformung der nach dem erfindungsgemäß hergestellten Elastomer-Formkörper hat es sich als vorteilhaft erwiesen, die Formwerkzeuginnenflächen zumindest zu Beginn einer Produktionsreihe mit üblichen äußeren Formtrennmitteln, beispielsweise auf Wachs- oder Silikonbasis oder insbesondere mit wäßrigen Seifenlösungen, zu beschichten. Insbesondere bewährt haben sich jedoch und daher vorzugsweise verwendet werden innere Formtrennmittel, wie sie beispielsweise beschrieben werden in der EP-A-153 639, EP-A-180 749 (AU 85/47 498), EP-A-173 888 (US 4 519 965), WO 84/03288 (EP-A-119 471) und WO 86/01215. Die Formstandzeiten betragen in Abhängigkeit von der Größe und Geometrie des Formteils durchschnittlich 3 bis 60 Minuten.

Die erfindungsgemäß hergestellten mikrozellulären PU-Elastomere besitzen Raumgewichte von 350 bis 800 g/l und werden vorzugsweise als Feder- und Dämpfungselemente im Kraftfahrzeugbereich und dem technischen Sektor genutzt.

Durch die nachfolgenden Beispiele soll die Erfindung näher erläutert werden.

Beispiel 1

Herstellung des NCO-gruppenhaltigen Prepolymeren

100 Gewichtsteile (GT) eines zuvor entwässerten linearen Polyether-Polyesterpolyols mit einer mittleren OH-Zahl von 56 mg KOH/g, welches ein Polykondensat aus einem kurzkettigen Polytetrahydrofuran mit einem durchschnittlichen Molekulargewicht von 250 g/mol und Adipinsäure darstellt, wurden mit 0,3 GT Trimethylolpropan und 38 GT 4,4'-MDI bei einer Temperatur von 115°C unter ständigem Rühren umgesetzt. Es wurde so ein Prepolymer erhalten, das einen NCO-Gehalt von 5,68 % besaß.

a) Herstellung des Formteiles (Vergleich)

Zu 100 GT dieses Prepolymers, welches zuvor auf eine Temperatur von 90°C gebracht wurde, wurden 4,2 GT einer Vernetzerkomponente mit einem Wassergehalt von 26,7 Gew.-%, bestehend aus einem Gemisch von Stabaxol 1, einem dem Fachmann bekannten sterisch gehinderten Carbodiimid zum Hydrolyseschutz, und Ethoxylaten der Rizinol- und Ölsäure, unter kräftigem Rühren zugegeben.

Dem Reaktionsgemisch wurden ferner 0,05 GT Desmorapid PP (Rhein-Chemie GmbH) zur Katalyse der Treibreaktion und 0,2 GT Silikonöl DC 193 (Air Products and Chemicals, Inc.) zur Verbesserung der Zellstruktur zugefügt. Nach einer Rührzeit von insgesamt 8 s wurde die Reaktionsmischung in eine auf 90°C erhitzte verschließbare Form gefüllt und 25 min ausgehärtet. Nach Entformung des mikrozellulären Produktes wurde das Formteil 24 h zwischengelagert, um eine Maßhaltigkeit aufgrund auftretender Bläheffekte zu garantieren. Danach wurde das Material einer thermischen Nachhärtung bei 110°C über 16 h unterzogen.

Das auf diese Weise hergestellte Material aus mikrozellulärem PU-Elastomer wies die erfindungsgemäßen Strukturen nicht auf, da GPC Signale im Bereich über 250000 g/mol nicht beobachtet wurden und ein Aufschmelzen über 230°C im DSC nicht mehr stattfand.

b) Herstellung des Formteiles (erfindungsgemäß)

100 GT des gleichen Prepolymers wurden bei identischen Verfahrensbedingungen mit 4,2 GT des Vernetzergemisches nach Beispiel 1 a) unter Zusatz von 0,07 GT eines Gemisches aus ethoxylierter Ölsäure mit im Mittel 9 Ethoxygliedern und aus dem Monoethanolaminsalz der n-Alkylbenzolsulfonsäure mit Alkylresten von $C_9H_{19}$ bis $C_{15}H_{31}$ zur Reaktion gebracht. Die Treibreaktion verlief dabei visuell deutlich langsamer. Die weitere Verfahrensweise erfolgte dann analog Beispiel 1 a).

Von den nach 1 a) und 1 b) hergestellten Produkten wurden mit dem DSC 7, Fa. Perkin-Elmer, Aufschmelzdiagramme bei einer Heizrate von 20°C/min aufgenommen. Weiterhin wurden charakteristische statische Kennwerte nach DIN ermittelt sowie GPC-Aufnahmen angefertigt. Dazu wurden die getemperten Proben unter gutem Rühren in einem Gemisch von N,N-Dimethylformamid (DMF) mit 1 Prozent Di-n-Butylamin bei 90°C aufgelöst. Die Lösezeit betrug 2 h, die Konzentration 10 %. Diese 10 %igen Lösungen wurden unverdünnt chromatographiert. Die Chromatographie erfolgte mit DMF als mobile Phase an einem Säulenset mit Ultrastyragel $10^6$ Å, $10^4$ Å, $10^3$ Å, 500 Å, 100 Å. Bei einer Retentionszeit von 39,8 min erschien ein Peak neben dem Hauptpeak bei 48,2 min. Nach Zugabe von 0,1 m Lithiumchlorid (0,1 mol LiCl auf 1 l der Gesamtlösung) verschwand der Peak bei 39,8 min völlig.

Sowohl der Peak bei 39,8 min, der nach untenstehender Tabelle einer Molmasse weit über 250000 g/mol entspricht, als auch dieses Verschwinden des Peaks bei Anwesenheit von LiCl, in unserem Falle 0,1 mol je Liter, sind Charakteristika der erfindungsgemäßen Strukturen.

Die Eichung mit definierten Polymethylmethacrylat (PMMA) - Proben kann durch folgende Tabelle wiedergegeben werden:

| Retentionszeit ("Time") in min | Molmasse in g/mol |
| --- | --- |
| 39,68 | 810 000 |
| 41,25 | 530 000 |

(fortgesetzt)

| Retentionszeit ("Time") in min | Molmasse in g/mol |
|---|---|
| 43,45 | 280 000 |
| 46,24 | 152 000 |
| 47,96 | 85 100 |
| 53,32 | 30 500 |
| 58,47 | 7 100 |
| 59,81 | 3 500 |

Die Auftragung des Logarithmus der Molmasse gegen die Retentionszeit ergab zwischen den Retentionszeiten 39,68 und 58,47 min in bekannter Weise eine Eichgerade. Im Chromatogramm erschienen auch noch Signale bei höheren Molmassen als 810 000 g/mol, die jedoch in erfindungsgemäßer Weise ebenfalls als "größer 250 000 g/mol" bezeichnet werden können, die mit LiCl verschwinden und die erfindungsgemäßen Strukturen charakterisieren, obwohl sie außerhalb des Eichbereiches liegen. Die Detektion erfolgte durch Messung des Brechungsindexes und/oder der Ultraviolett-Absorption bei 265 nm. Die Art der Detektion ist ohne Einfluß auf die Aussagen im Zusammenhang mit dieser Erfindung.

Der Kennwert Druckverformungsrest wurde in Abwandlung zur DIN 53 572 bei 80°C, 22 h und 60 %iger Kompression bei Verwendung von Abstandsstücken mit 18 mm Hohe und Probekörperabmaßen von 40 x 40 mm Grundfläche und 30 ± 1 mm Hohe gemessen.

Die Berechnung erfolgte nach folgender Gleichung

$$DV\ (\%) = \frac{h_0 - h_2}{h_0 - h_1} \times 100\ \%$$

$h_o$ = ursprüngliche Höhe der Probekörper in mm
$h_1$ = Höhe der Probekörper im verformten Zustand in mm
$h_2$ = Höhe der Probekörper nach Entspannung in mm.

Die nach den Beispielen 1 a und 1 b hergestellten mikrozellulären PU-Elastomere besaßen einen Harnstoffgehalt von 16,3 Gew.-%.

Die Berechnung des Harnstoffgehaltes erfolgte dabei unter der Annahme eines vollständigen Umsatzes der Polyurethan bildenden Reaktanden und eines vollkommenen $CO_2$ - Austausches nach folgender Gleichung

$$\%\ HS = \frac{m_{H_2O} + m_{MDI} - m_{CO_2}}{m_{PO} + mMDI + mKV + m_{H_2O} - m_{CO_2}} \times 100$$

$m_{PO}$ =    Rezeptureinsatzmenge des Polyols
$m_{MDI}$ =    4,4'-MDI-Menge, die für Wasserreaktion zur Verfügung steht
$mMDI$ =    Rezeptureinsatzmenge des 4,4'-MDI
$m_{co2}$ =    entstehende $CO_2$-Menge in g bei stöchiometrischem Umsatz
$m_{H2O}$ =    eingesetzte Wassermenge
$mKV$ =    Menge der mitverwendeten Kettenverlängerer / Vernetzer

Beim Beispiel 1b lagen die erfindungsgemäßen Strukturen vor, wodurch der Druckverformungsrest gegenüber dem mikrozellulären Elastomeren im Beispiel 1a gleicher chemischer Zusammensetzung, aber ohne diese Strukturen, beträchtlich sank (siehe Tab.1).

Beispiel 2 a (erfindungsgemäß)

Herstellung des Prepolymeren

Die Herstellung des NCO-gruppenhaltigen Prepolymeren aus einem linearen Polyether-Polyesterpolyol erfolgte entsprechend Beispiel 1. 100 GT dieses Polyols wurden mit 0,3 GT Trimethylolpropan und 33 GT 4,4'-MDI bei einer Temperatur von 120°C unter ständigem Rühren umgesetzt. Das entstandene Prepolymer wies nach Ausreaktion einen NCO-Gehalt von 4,78 Gew.-% auf.

Herstellung des Formteils

100 GT des Prepolymeren wurden bei 90°C mit 2,64 GT eines Vernetzergemisches mit einem Wassergehalt von 36,3 Gew.-%, bestehend aus Stabaxol 1, einem Gemisch aus ethoxylierter Öl- und Rizinolsäure, dem Monoethanolaminsalz der n-Alkylsulfonsäure und dem Natriumsalz des sulfatierten Rizinusöls unter kräftigem Rühren und unter Zugabe von 0,03 GT Desmorapid PP sowie 0,2 GT Silikonöl DC 193 zur Reaktion gebracht und in eine auf 90°C temperierte Form gegossen. Nach einer Formstandzeit von 25 min wurde das mikrozelluläre Polyurethan nach einer Zwischenlagerzeit von 24 h bei 110°C über 16 h getempert. Anschließend wurden die statisch-mechanischen Kennwerte sowie ein DSC-Schmelzdiagramm und eine GPC-Aufnahme aufgenommen.

Das der Prüfung unterzogene Produkt besaß einen rechnerisch ermittelten Harnstoffgehalt von 13,4 Gew.-%. Es wies damit wesentliche Merkmale der Erfindung, jedoch einen etwas niedrigeren Harnstoffgehalt gegenüber dem empfohlenen Wert von ≥ 14 Gew.-% auf.

Beispiel 2 b (erfindungsgemäß)

Herstellung des Prepolymeren

Die Herstellung des NCO-Prepolymers erfolgte nach Beispiel 2 a mit dem Unterschied, daß anstelle von 33 GT 4,4'-MDI 37 GT des Isocyanates eingesetzt wurden. Das ausreagierte Prepolymer wies einen NCO-Gehalt von 5,65 Gew.-% auf.

Herstellung des Formteiles

100 GT des Prepolymeren, welches auf eine Temperatur von 90°C gebracht wurde, wurden mit 3,1 GT des in Beispiel 2 a eingesetzten Vernetzergemisches umgesetzt. Entformung und Materialnachbehandlung erfolgten ebenfalls entsprechend der Beschreibung des Beispiels 2 a.

Von dem mikrozellulären Polyurethanelastomer, welches rechnerisch einen Harnstoffgehalt von 15,7 Gew.-% besaß, wurden die statischmechanischen Kennwerte ermittelt, das Aufschmelzverhalten mittels DSC charakterisiert sowie eine Überprüfung mittels GPC durchgeführt.

Man beobachtete im Vergleich zu Beispiel 2a eine deutliche relative Vergrößerung des GPC-Peaks bei größer 250000 g/mol gegenüber dem die eigentliche Polymerkette anzeigenden Hauptpeak bei ca. 100000 g/mol und damit eine Zunahme des Gehaltes der erfindungsgemäßen Strukturen im Elastomer. Das drückte sich auch in einem etwas höheren DSC-Schmelzbereich und daraus folgend einem niedrigeren Druckverformungsrest bei auch sonst besseren mechanischen Kennwerten aus.

Beispiel 3 a (erfindungsgemäß, Temperung nach 30 min Zwischenlagerung)

Herstellung des NCO-Prepolymeren

100 GT eines entwässerten linearen Polyether-Polyesterpolyols mit der Zusammensetzung entsprechend Beispiel 1, wurden mit 0,3 GT Trimethylolpropan und 38 GT 4,4'-MDI bei einer Temperatur von 115°C bei intensiver Durchmischung zur Reaktion gebracht. Der NCO-Gehalt des fertigen Prepolymers wurde mit 5,65 Gew.-% gemessen.

Herstellung des Formteiles

100 GT des Prepolymeren wurden bei 90°C mit 3,1 GT eines Vernetzers, dessen Zusammensetzung der der Vernetzerkomponente des Beispieles 2 a entsprach, unter Zusatz von 0,03 GT Desmorapid PP und 0,2 GT Silikonöl DC 193 miteinander umgesetzt und in eine auf 90°C temperierte, dichtschließende Form gegossen.

Nach einer Formstandzeit von 30 min und einer Zwischenlagerzeit von 30 min wurde das Polyurethanformteil bei 110°C über 16 h nachgehärtet.

Von dem so erhaltenen mikrozellulären Polyurethanelastomer wurden die üblichen statischen Kennwerte ermittelt sowie eine DSC-Schmelzkurve und ein GPC-Diagramm aufgenommen.

Beispiel 3 b (erfindungsgemäß, Temperung nach 24 h Zwischenlagerung)

Die Herstellung des NCO-Prepolymeren und die Fertigung des Formteiles einschließlich seiner Nachbehandlung und Charakterisierung wurden wie in Beispiel 3 a beschrieben, nur mit dem Unterschied durchgeführt, daß die Zwischenlagerzeit des Formteils 24 h betrug.

Beispiele 4 a und b

Herstellung des NCO-gruppenhaltigen Prepolymeren (erfindungsgemäß)

a) 100 GT eines Polyesterolgemisches, welches in gleichen Teilen Polykondensate aus einem äquimolaren Gemisch aus Monoethylenglykol und Butandiol-1,4 der durchschnittlichen Molekulargewichte von 2000 g /mol enthielt, wurden mit 0,3 GT Trimethylolpropan und 35 GT 4,4'-MDI, welchem zuvor 15 ppm Diethylenglykol-bis-chloroformiat zugeführt worden waren, bei einer Temperatur von 115°C unter intensivem Rühren zur Reaktion gebracht. Die Messung des NCO-Gehaltes ergab nach Ablauf der Reaktion einen Wert von 5,12 Gew.-%.

b) Die Synthese des Prepolymeren erfolgte bei gleicher Rohstoffeinwaage und identischen Verfahrensbedingungen wie unter 4 a beschrieben, mit dem Unterschied, daß auf die Zugabe des Diethylenglykol-bis-chloroformiats verzichtet wurde. Der NCO-Gehalt des Prepolymeren wurde mit 5,26 Gew.-% vermessen.

Die Herstellung der Formteile erfolgte für die Beispiele 4 a und 4 b in gleicher Weise, wobei 100 GT des Prepolymeren bei 90°C mit 2,82 GT bei Beispiel 4 a und mit 2,90 GT bei Beispiel 4 b der unter Beispiel 2 a beschriebenen Vernetzermischung unter guter Homogenisierung zur Reaktion gebracht wurden. Das Reaktionsgemisch wurde anschließend in eine auf 90°C geheizte Form gegossen. Nach einer Standzeit von 25 min wurde die Form geöffnet, das mikrozellulare Polyurethanformteil entnommen und nach einer Zwischenlagerung von 24 h über 16 h bei 110°C nachverfestigt. Das ausreagierte Material, das einen rechnerisch bestimmten Harnstoffgehalt von 14,6 Gew.-% besaß, wurde hinsichtlich seiner statisch-mechanischen Kennwerte, seines dynamischen Setzbetrages, des GPC-Verhaltens und seiner DSC-Aufschmelzcharakteristik überprüft.

Beispiel 4 c (Vergleich)

Die Synthese des Prepolymeren erfolgte entsprechend Beispiel 4 b.
Die Herstellung der Formteile wurde im Gegensatz zu den Beispielen 4 a und 4 b mit dem Vernetzergemisch entsprechend Beispiel 1 a durchgeführt, wobei 100 GT des Prepolymeren bei 90°C mit 3,94 GT des Vernetzergemisches unter guter Homogenisierung zur Reaktion gebracht und in eine auf 90°C geheizte Form gegossen wurden. Das nach einer Standzeit von 25 min der Form entnommene Elastomerformteil wurde wie unter 4 b beschrieben weiter behandelt und geprüft.

Beispiel 5 (Vergleich)

Herstellung des NCO-Prepolymeren

100 GT eines entwässerten linearen Polyether-Polyesterpolyols der Zusammensetzung entsprechend Beispiel 1, wurden mit 24 GT Desmodur 15 (Naphthylendiisocyanat) bei 140°C unter intensiver Homogenisierung zur Reaktion gebracht. Das Desmodur 15 wurde hierbei als Feststoff dosiert. Der NCO-Gehalt des ausreagierten Prepolymeren betrug 3,92 Gew.-%.

Herstellung des Formteiles

100 GT des auf 90°C aufgeheizten Prepolymeren wurden mit 2,9 GT der in Beispiel 1 a beschriebenen Vernetzermischung bei Zusatz von 0,03 GT Desmorapid und 0,2 GT Silikonöl DC 193 zur Reaktion gebracht. Die Reaktionsmischung wurde dann, wie in den bisherigen Beispielen genannt, in eine 90°C heiße Form gegossen. Nach einer Formstandzeit von 25 min wurde das Formteil 24 h zwischengelagert, bei 120°C über 16 h getempert und hinsichtlich seiner mechanischen Kennwerte überprüft.

Beispiele 6 a bis c (Maschinenversuch)

Herstellung des NCO-Prepolymeren

14000 GT einer zuvor entwässerten ethergruppenenthaltenden Polyesterpolyolmischung aus 12838 GT eines Polykondensates aus einem kurzkettigen Polytetrahydrofuran mit einem durchschnittlichen Molekulargewicht von 250 g/mol und Adipinsäure und 1162 GT eines Polykondensates aus eben diesem kurzkettigen Polytetrahydrofuran, Trimethylolpropan und Adipinsäure, wobei das Mischungsverhältnis der Polyole so gewählt war, daß der Trimethylolpropan-Gehalt 3 g/1000 g der gesamten Polyolmischung betrug, wurden mit 5320 GT 4,4'-MDI bei einer Temperatur von 115°C unter intensivem Rühren umgesetzt. Der NCO-Gehalt des Prepolymeren wurde mit 5,97 Gew.-% vermessen.

a) Die Verschäumung wurde mit einer Niederdruckschäummaschine bei einer Mischerdrehzahl von 2700/min und einem Gesamtausstoß von 18,9 g/s vorgenommen. Das Mischungsverhältnis von Prepolymer- zu Vernetzerkomponente entsprach einem Verhältnis von 100 : 4,25.
Das Vernetzergemisch, welches einen Wassergehalt von 28,1 % aufwies, bestand aus Stabaxol 1, einem Gemisch aus ethoxyllerter Öl - und Rizinolsäure, dem Monoethanolaminsalz der n-Alkylsulfonsäure mit Alkylresten von $C_9$ - $C_{15}$ und dem Natriumsalz des sulfatierten Rizinusöls. Der Vernetzermischung wurden, bezogen auf die Prepolymerkomponente, 0,03 GT Desmorapid PP und 0,2 GT Silikonöl DC 193 zugesetzt. Das Reaktionsgemisch wurde in dicht schließende, auf 90°C aufgeheizte Prüffeder- und Blockformen gefüllt, die nach 30 min geöffnet wurden. Nach einer Zwischenlagerzeit von maximal 30 min wurden die Formteile 16 h bei 110°C getempert.

b) Prepolymerherstellung, Rezeptur und technische Verfahrensbedingungen zur Formteilherstellung entsprachen bis auf den Modus der thermischen Nachbehandlung völlig den Vorschriften nach Beispiel 6 a. Verändert wurde lediglich die Zwischenlagerzeit zwischen Entformung und Temperung, die auf 24 h erweitert wurde.

c) Rezeptur und Herstellung des Prepolymeren sowie der Modus der thermischen Nachbehandlung wurden entsprechend Beispiel 6 a gewählt. Es erfolgte jedoch eine Modifizierung des Vernetzergemisches der Zusammensetzung nach Beispiel 6 a dahingehend, daß dem Vernetzergemisch 0,02 GT 4,4'-MDI, bezogen auf 100 GT des Prepolymeren, unter kräftigem Rühren zugegeben wurden. Es entstand innerhalb von 30 s eine feinverteilte, mindestens 4 h lagerstabile Harnstoff-Vernetzer-Dispersion. Der bei vollständigem Umsatz der Isocyanatgruppen und bei stöchiometrischem Reaktionsablauf errechnete Harnstoffgehalt betrug ca. 0,017 GT auf 4,25 GT Vernetzerkomponente. Der weitere Ablauf der Formteilherstellung einschließlich seiner Nachbehandlung erfolgte entsprechend Beispiel 6 a.

Von den nach den Beispielen 6 a bis 6 c erhaltenen mikrozellulären PU-Elastomeren, die einen Harnstoffgehalt von 16,3 Gew.-% besaßen, wurden zusätzlich zur Aufnahme von DSC-Schmelzkurven, GPC-Diagrammen und den üblichen statischen Kennwerten energiekonstante dynamische Prüfungen an einer Prüffeder mittels eines Hydropulsers ermittelt. Die Prüffeder wies eine zylindrische Gestalt mit einer Höhe von 100 mm, einen Außendurchmesser von 50 mm bei einem Innendurchmesser von 10 mm auf und besaß drei Segmenteinschnürungen. Nach Belastung der Prüffeder über 100 000 Lastwechsel mit 6 KN bei einer Frequenz von 1,2 Hz wurde der Setzbetrag als Differenz zwischen Ausgangs- und Eingangswert der Federhöhe gemessen und war ein Maß für die Druckverformung während des Dauerschwingversuches. Je größer das Rückverformungsmaß war, um so niedriger war der Setzbetrag und desto besser die dynamische Leistungsfähigkeit des Materials. Die Prüfung unter kraftgeregelten Bedingungen erlaubte damit eine reale Aussage über eine Werkstoffeignung für Stoßdämpfungssysteme im Kraftfahrzeugbau.

Beispiel 7 Maschinenversuch (Vergleich)

Herstellung des Prepolymeren

14000 GT der zuvor entwässerten Polyolmischung der Zusammensetzung nach Beispiel 6 a wurden mit 4900 GT 4,4'-MDI bei einer Temperatur von 115°C bei intensiver Durchmischung umgesetzt. Der NCO-Gehalt des vollständig ausreagierten Prepolymeren wurde mit 5,39 Gew.-% vermessen.

Herstellung des Formteils

Die Verschäumung wurde analog Beispiel 6 a mit einer Niederdruckmaschine bei einer Mischerdrehzahl von 2700/min und einem Ausstoß von 18,9 g/s ausgeführt.
Das Mischungsverhältnis von Prepolymer und Vernetzerkomponente wurde auf 100 : 4,28 eingestellt. Die Zusammensetzung der Vernetzermischung wurde Beispiel 1 a entsprechend gewählt. Der Vernetzermischung wurden, bezogen auf die Prepolymerkomponente, 0,03 GT Desmorapid PP und 0,2 GT Silikonöl DC 193 vor der Verschäumung zugegeben. Die Reaktionsmischung wurde in 90°C heiße Prüffeder- und Blockformen eingegeben, welche sofort dicht verschlossen wurden. Nach einer Standzeit von 25 min wurden die Formen geöffnet, die mikrozellulären Formkörper 24 h zwischengelagert und anschließend 16 h bei 110°C einer Nachhärtung unterzogen.

Neben der Prüfung der statischen Kennwerte der DSC- und GPC-Analytik wurde an den Prüffedern der dynamische Setzbetrag unter energiekonstanten Bedingungen ermittelt.

Die in den Beispielen 1 bis 7 ermittelten Kennwerte sind in den Tabellen 1 und 2 zusammengefaßt.

Tabelle 1

Beispiele (Laborhandguß)

| physikalische Eigenschaften | 1a (Vergleich) | 1b | 2a | 2b | 3a | 3b | 4a | 4b | 4c (Vergleich) | 5 (Vergleich) |
|---|---|---|---|---|---|---|---|---|---|---|
| Dichte (g/cm³) | 0,5 | 0,51 | 0,5 | 0,5 | 0,52 | 0,52 | 0,53 | 0,51 | 0,53 | 0,49 |
| Zugfestigkeit (N/mm²) DIN 53 571 | 3,6 | 3,8 | 3,4 | 4 | 4 | 4,2 | 5,4 | 4,7 | 4,9 | 3,4 |
| Bruchdehnung (%) DIN 53 571 | 540 | 500 | 470 | 480 | 405 | 450 | 513 | 513 | 578 | 340 |
| Weiterreißwiderstand (N/mm) DIN 53 515 | 16,5 | 17 | 13,7 | 17,3 | 17 | 21,1 | 22,5 | 20,6 | 20 | 13,5 |
| Druckverformungsrest 22 h, 80°C (%) | 70 | 49 | 29 | 25 | 26 | 31 | 18 | 23 | 33 | 19 |
| Harnstoffgehalt (Gew.-%) | 16,3 | 16,3 | 13,4 | 15,7 | 16,3 | 16,3 | 14,6 | 14,6 | 14,6 | 9,7 |

(Fortsetzung Tabelle 1)

| physikalische Eigenschaften | 1a (Vergleich) | 1b | 2a | 2b | 3a | 3b | 4a | 4b | 4c (Vergleich) | 5 (Vergleich) |
|---|---|---|---|---|---|---|---|---|---|---|
| DSC-Schmelzbereich (°C) 20°C/min Heizrate | 132-220 | 148-233 | 135-236 | 138-242 | 149-250 | 139-247 | 139-244 | 150-248 | 118-238 | - |
| GPC-Signal mit scheinbarer Molmasse >250000 g/mol | nicht vorhanden | vorhanden | vorhanden | vorhanden | vorhanden | vorhanden | vorhanden | vorhanden | nicht vorhanden | vorhanden |
| GPC-Signal verschwindet mit Hilfe von 0,1 m LiCl | - | ja | ja | ja | ja | ja | ja | ja | - | ja |

EP 0 868 462 B1

Tabelle 2

Beispiele (Maschinenversuche)

| physikalische Eigenschaften | 6a | 6b | 6c | 7 (Vergleich) |
|---|---|---|---|---|
| Dichte (g/cm$^3$) | 0,49 | 0,5 | 0,49 | 0,5 |
| Zugfestigkeit (N/mm$^2$) DIN 53 571 | 4,2 | 4,7 | 4,4 | 3,8 |
| Bruchdehnung (%) DIN 53571 | 480 | 520 | 470 | 550 |
| Weiterreißwiderstand DIN 53 515 (N/mm) | 13,8 | 15 | 13,5 | 14,4 |
| Druckverformungsrest 22 h, 80°C (%) | 15 | 26 | 13 | 29 |
| dynamischer Setzbetrag (%) 100 000 Lastwechsel bei 1,2 Hz, Belastung 6 KN | 12,2 | 17,8 | 11,8 | >20 |
| DSC-Schmelzbereich (°C) Heizrate 20°C/min | 143-242 | 149-242 | 146-245 | 113-209 |
| GPC-Signal mit scheinbarer Molmasse > 250 000 g/mol | vorhanden | vorhanden | vorhanden | nicht vorhanden |
| GPC-Signal verschwindet mit 0,1 m LiCl | ja | ja | ja | - |

EP 0 868 462 B1

**Patentansprüche**

1. Mikrozelluläres, harnstoffgruppenhaltiges Polyurethanelastomer auf Basis

   a) einer im wesentlichen aus 4,4'-Diphenylmethandiisocyanat bestehenden Isocyanatkomponente mit

   b) mindestens einer oligomeren Polyhydroxylverbindung mit einer zahlenmittleren Molmasse von 1000 bis 5000 g/mol und einer Funktionalität von 1,7 bis 3,

   c) gegebenenfalls niedermolekularen Kettenverlängerungs- und/oder Vernetzungsmitteln und

   d) Treibmitteln

   sowie

   e) Katalysatoren und gegebenenfalls

   f) Hilfsmitteln und/oder Zusatzstoffen,

   das einen Harnstoffgehalt von 14 bis 18 Gew.-%, der definiert ist als die Menge von aus Diphenylmethandiisocyanat entstandenem Harnstoff der Summenformel $C_{14}H_{12}ON_2$ in Prozent, bezogen auf die Gesamtmenge des Elastomeren nach der Harnstoffbildung, besitzt
   und eine physikalisch-chemische Struktur aufweist,
   die charakterisiert ist durch ein neben dem niedermolekulareren Hauptsignal auftretendes Signal aus einem oder mehreren Peaks bei einer (scheinbaren) Molmasse von größer 250 000 g/mol, gemessen mit der Gelpermeations-Chromatographie (GPC) aus einer in N,N-Dimethylformamid mit 1 Prozent Di-n-Butylamin bei 90 °C hergestellten Lösung des mikrozellulären Polyurethanelastomeren gegen Polymethylmethacrylat (PMMA) als Standard, das nach Zugabe von Lithiumchlorid in diese Lösung verkleinert wird oder verschwindet,
   und die herstellbar ist durch Zugabe von Brönstedt- bzw. Lewis-sauren Reagenzien in einer Menge von 0,01 bis 5 Gew.-%, bezogen auf das Gewicht der Komponenten a), b), e) und gegebenenfalls c).

2. Verfahren zur Herstellung eines mikrozellulären, harnstoffgruppenhaltigen Polyurethanelastomers gemäß Anspruch 1 durch Umsetzung

   a) einer im wesentlichen aus 4,4'-Diphenylmethandiisocyanat bestehenden Isocyanatkomponente mit

   b) mindestens einer oligomeren Polyhydroxylverbindung mit einer zahlenmittleren Molmasse von 1000 bis 5000 g/mol und einer Funktionalität von 1,7 bis 3,

   c) gegebenenfalls niedermolekularen Kettenverlängerungs- und/oder Vernetzungsmitteln und

   d) Treibmitteln

   sowie

   e) Katalysatoren und gegebenenfalls

   f) Hilfsmitteln und/oder Zusatzstoffen

   in geschlossenen Formen,
   dadurch gekennzeichnet, daß Brönstedt- bzw. Lewis-saure Reagenzien in einer Menge von 0,01 bis 5 Gew.-%, bezogen auf das Gewicht der Komponenten a), b), e) und gegebenenfalls c) zugegeben werden und eine Temperung des mikrozellulären, harnstoffgruppenhaltigen Polyurethanelastomers bei 100 bis 120°C über 8 bis 24 Stunden durchgeführt wird.

3. Verfahren nach Anspruch 2, dadurch gekennzeichnet, daß die Brönstedt- bzw. Lewis-saure Reagenzien in einer Menge von 0,05 bis 2 Gew.-%, bezogen auf das Gewicht der Komponenten a), b), e) und gegebenenfalls c), eingesetzt werden.

**4.** Verfahren nach Anspruch 2 oder 3, dadurch gekennzeichnet, daß ein Salz aus Monoethanolamin und n-Alkylbenzolsulfonsäure mit Alkylresten von $C_9H_{19}$ bis $C_{15}H_{31}$ eingesetzt wird.

**5.** Verfahren nach einem der Ansprüche 2 bis 4, dadurch gekennzeichnet, daß die Komponenten a), d), e) und gegebenenfalls f) Harnstoffgruppen in einem Anteil von 0,05 bis 5 Gew.-% enthalten.

**6.** Verfahren nach einem der Ansprüche 2 bis 5, dadurch gekennzeichnet, daß die oligomeren Polyhydroxylverbindungen mit einer zahlenmittleren Molmasse von 1000 bis 5000 g/mol der Komponente b) eine Funktionalität von 2 aufweisen.

**7.** Verwendung der mikrozellulären, harnstoffgruppenhaltigen Polyurethanelastomere gemäß Anspruch 1 zur Herstellung von Dämpfungselementen.

**Claims**

**1.** A microcellular polyurethane elastomer containing urea groups, based on

a) an isocyanate component consisting essentially of diphenylmethane 4,4'-diisocyanate together with

b) at least one oligomeric polyhydroxyl compound having a number-average molar mass of from 1000 to 5000 g/mol and a functionality of from 1.7 to 3,

c) if desired, low molecular weight chain extenders and/or crosslinkers and

d) blowing agents

and also

e) catalysts and, if desired,

f) auxiliaries and/or additives,

which has a urea content of from 14 to 18% by weight, defined as the amount of urea of the empirical formula $C_{14}H_{12}ON_2$ obtained from diphenylmethane diisocyanate in percent, based on the total amount of the elastomer after urea formation,
and has a physicochemical structure
which, in the gel permeation chromatograph (GPC) of a solution of the microcellular polyurethane elastomer prepared at 90°C in N,N-dimethylformamidecontaining 1 percent of di-n-butylamine measured against polymethyl methacrylate (PMMA) as standard, displays a signal occurring in addition to the low molecular weight main signal and comprising one or more peaks at an (apparent) molar mass of greater than 250,000 g/mol which becomes smaller or disappears on addition of lithium chloride to this solution,
and which can be prepared by addition of Brönstedt acid or Lewis acid reagents in an amount of from 0.01 to 5% by weight, based on the weight of the components a), b), e) and, if used, c).

**2.** A process for preparing a microcellular polyurethane elastomer containing urea groups as claimed in claim 1 by reacting

a) an isocyanate component consisting essentially of diphenylmethane 4,4'-diisocyanate with

b) at least one oligomeric polyhydroxyl compound having a number-average molar mass of from 1000 to 5000 g/mol and a functionality of from 1.7 to 3,

c) if desired, low molecular weight chain extenders and/or crosslinkers and

d) blowing agents

and also

e) catalysts and, if desired,

f) auxiliaries and/or additives

in closed molds,
wherein Brönstedt acid or Lewis acid reagents are added in an amount of from 0.01 to 5% by weight, based on the weight of the components a), b), e) and, if used, c), and the microcellular polyurethane elastomer containing urea groups is heated at from 100 to 120°C for from 8 to 24 hours.

3. A process as claimed in claim 2, wherein the Brönstedt acid or Lewis acid reagents are used in an amount of from 0.05 to 2% by weight, based on the weight of the components a), b), e) and, if used, c).

4. A process as claimed in claim 2 or 3, wherein a salt of monoethanolamine and n-alkylbenzenesulfonic acid having alkyl radicals of from $c_9H_{19}$ to $C_{15}H_{31}$ is used.

5. A process as claimed in any of claims 2 to 4, wherein the components a), d), e) and, if used, f) contain from 0.05 to 5% by weight of urea groups.

6. A process as claimed in any of claims 2 to 5, wherein the oligomeric polyhydroxyl compounds having a number-average molar mass of from 1000 to 5000 g/mol of the component b) have a functionality of 2.

7. Use of the microcellular polyurethane elastomers containing urea groups as claimed in claim 1 for producing damping elements.

**Revendications**

1. Elastomère de polyuréthanne microcellulaire contenant un ou plusieurs groupes urée, à base de

   a) un composant d'isocyanate constitué essentiellement du 4,4'-diphénylméthane-diisocyanate, avec

   b) au moins un composé polyhydroxylé oligomère possédant une masse molaire moyenne en nombre de 1000 à 5000 g/mole et une fonctionnalité de 1,7 à 3,

   c) le cas échéant, des agents d'allongement de chaînes et/ou des agents de réticulation à bas poids moléculaires, et

   d) des agents moussants,

   ainsi que

   e) des catalyseurs et le cas échéant

   f) des adjuvants et/ou des additifs,

   qui possède une teneur en groupes urée de 14 à 18% en poids, teneur que l'on définit comme étant la quantité en pour cent de l'urée qui répond à la formule brute $C_{14}H_{12}ON_2$ et que l'on obtient à partir du diphénylméthane-diisocyanate, rapportée à la quantité totale de l'élastomère après formation de l'urée,
   et qui présente une structure physico-chimique,
   qui se caractérise par un signal apparaissant en plus du signal principal à bas poids moléculaire, constitué par un ou plusieurs pics à une masse molaire (apparente) supérieure à 250.000 g/mole, mesurée avec la chromatographie par perméation de gel (GPC) à partir d'une solution, préparée dans du N,N-diméthylformamide avec 1% de di-n-butylamine à 90°C, de l'élastomère de polyuréthanne microcellulaire par rapport à du polyméthacrylate de méthyle (PMMA) à titre de norme, qui diminue ou qui disparaît après addition de chlorure de lithium dans cette solution,
   et que l'on peut préparer par addition d'acides de Brönstedt, respectivement de Lewis à titre de réactifs en une quantité de 0,01 à 5% en poids rapportés au poids des composants a), b), e) et le cas échéant c).

2. Procédé pour la préparation d'un élastomère de polyuréthanne microcellulaire contenant un ou plusieurs groupes urée selon la revendication 1 par mise en réaction de

    a) un composant d'isocyanate constitué essentiellement du 4,4'-diphénylméthane-diisocyanate, avec

    b) au moins un composé polyhydroxylé oligomère possédant une masse molaire moyenne en nombre de 1000 à 5000 g/mole et une fonctionnalité de 1,7 à 3,

    c) le cas échéant, des agents d'allongement de chaînes et/ou des agents de réticulation à bas poids moléculaires, et

    d) des agents moussants,

ainsi que

    e) des catalyseurs et le cas échéant

    f) des adjuvants et/ou des additifs,

dans des moules fermés,
caractérisé en ce qu'on ajoute des acides de Brönstedt, respectivement de Lewis à titre de réactifs en une quantité de 0,01 à 5% en poids rapportés au poids des composants a), b), e) et le cas échéant c), et on soumet à un traitement thermique l'élastomère de polyuréthanne microcellulaire contenant un ou plusieurs groupes urée à une température de 100 à 120°C pendant un laps de temps de 8 à 24 heures.

3.    Procédé selon la revendication 2, caractérisé en ce qu'on met en oeuvre les acides de Brönstedt, respectivement de Lewis à titre de réactifs en une quantité de 0,05 à 2% en poids rapportés au poids des composants a), b), e) et le cas échéant c).

4.    Procédé selon la revendication 2 ou 3, caractérisé en ce qu'on met en oeuvre un sel de monoéthanolamine et d'acide n-alkylbenzènesulfonique contenant des radicaux alkyle de $C_9H_{19}$ à $C_{15}H_{31}$.

5.    Procédé selon l'une quelconque des revendications 2 à 4, caractérisé en ce que les composants a), d), e), le cas échéant f) contiennent des groupes urée en une fraction de 0,05 à 5% en poids.

6.    Procédé selon l'une quelconque des revendications 2 à 5, caractérisé en ce que les composés polyhydroxylés oligomères possédant une masse molaire moyenne en nombre de 1000 à 5000 g/mole, du composant b), présentent une fonctionnalité égale à 2.

7.    Utilisation des élastomères de polyuréthanne microcellulaires contenant un ou plusieurs groupes urée selon la revendication 1 pour la fabrication d'éléments d'amortissement.